# EUROPEAN PATENT SPECIFICATION

(11) **EP 4 549 171 B1**
(45) Date of publication and mention of the grant of the patent: **04.11.2026**
(21) Application number: 24207274.2
(22) Date of filing: 17.10.2024
(51) Int. Cl.: B60C 9/18, B60C 9/28, B60C 11/00

(54) **MOTORCYCLE TIRE**
MOTORRADREIFEN
PNEU DE MOTOCYCLETTE

(30) Priority: 01.11.2023 JP 2023187956
(43) Date of publication of application: 07.05.2025
(73) Proprietor: Sumitomo Rubber Industries, Ltd., Kobe-shi, Hyogo 651-0072 (JP)
(72) Inventor: NOGUCHI, Yoshihisa, Kobe-shi, 651-0072 (JP)
(74) Representative: Manitz Finsterwald Patent- und Rechtsanwaltspartnerschaft mbB

(56) References cited:
- EP-A1- 4 119 361
- JP-A- H0 624 207
- US-B2- 9 248 702

## Description

### BACKGROUND OF THE INVENTION

### Field of the Invention

The present invention relates to a motorcycle tire.

### Background Art

Japanese Patent No. 6946646 proposes a motorcycle tire including a tread reinforcing layer in a tread portion thereof. This tire is expected to improve cornering performance by specifying an angle of each belt cord included in the tread reinforcing layer with respect to the tire circumferential direction. US 9,248,702 B2 discloses a two-wheeled automotive vehicle tire which includes a tread portion, a sidewall portion, a bead portion, a carcass, and a tread reinforcing layer disposed outward of the carcass and inward of the tread portion in a tire radial direction. The tread reinforcing layer is formed as at least one reinforcing ply wherein reinforcing cords are disposed so as to be tilted relative to the tire circumferential direction. A tread rubber disposed in the tread portion includes a center rubber disposed in a region including a tire equator as a center thereof, and shoulder rubbers disposed on tread end sides, wherein the center rubber includes a center cap layer and a center base layer. A rubber hardness at 23°C of the center base layer and a rubber hardness at 23°C of the center cap layer are lower than a rubber hardness at 23°C of each shoulder rubber. A complex elastic modulus at 70°C of the center base layer and a complex elastic modulus at 70°C of the center cap layer are lower than a complex elastic modulus at 70°C of each shoulder rubber. EP 4 119 361 A1 discloses a tire for an automated two-wheeled vehicle comprising a tread part, a sidewall part, a bead part, a carcass, and a belt layer arranged on an outer side of the carcass and on an inner side of the tread part in a tire radial direction, the tread part comprising a crown part located at a center in a tire axial direction and a pair of shoulder parts located outside the crown part, wherein a hardness of the rubber composition of the crown part is higher than a hardness of the rubber composition of the rubber composition of the shoulder part, and a stress at 300% elongation of the rubber composition of the crown part is higher than a stress at 300% elongation of the rubber composition of the shoulder part. JP H06-24207 A discloses a motorcycle tire having a tread part, a sidewall part, a bead part, a carcass, and a belt layer which consists of an inner layer arranged outside of the carcass in a radial direction and outer layer arranged outside of the inner layer in the radial direction. The inner layer consists of two or more plies in which belt cords are inclined with respect to the tire equator, and the outer layer is made from band-shaped ply of such a structure that a cord is covered with topping rubber, and this band-shaped ply is wound spirally inclined at a minor angle to the tire equator C.

In recent years, as the performance of motorcycles and the like has been improved, there has been a growing demand for motorcycle tires to have further improved cornering performance and stability during braking.

The present invention has been made in view of the aforementioned circumstances, and a main object of the present invention is to provide a motorcycle tire that can improve stability during braking and cornering performance.

### SUMMARY OF THE INVENTION

The present invention is directed to a motorcycle tire including: a tread portion; a pair of sidewall portions; a pair of bead portions; and a carcass extending on and between the pair of bead portions, wherein the tread portion includes a tread reinforcing layer placed outward of the carcass in a tire radial direction, and a tread rubber placed outward of the tread reinforcing layer in the tire radial direction, the tread reinforcing layer includes a belt layer including a plurality of belt cords inclined with respect to a tire circumferential direction, and a band layer placed outward of the belt layer in the tire radial direction and including at least one band cord helically wound in the tire circumferential direction, a development width of the band layer is smaller than a development width of the belt layer, the tread rubber includes a crown rubber placed in a region including a tire equator, and shoulder rubbers each placed outward of the crown rubber in a tire axial direction in a region including a tread edge, a hardness at 100°C of each shoulder rubber is higher than a hardness at 100°C of the crown rubber, a complex elastic modulus at 100°C of each shoulder rubber is higher than a complex elastic modulus at 100°C of the crown rubber, and a 300% modulus at 100°C of each shoulder rubber is higher than a 300% modulus at 100°C of the crown rubber.

As a result of adopting the above-described configuration, the motorcycle tire of the present invention can improve stability during braking and cornering performance.

### BRIEF DESCRIPTION OF THE DRAWINGS

FIG. 1 is a cross-sectional view showing a motorcycle tire of one embodiment of the present invention;
FIG. 2 is an enlarged perspective view showing inner members of the tire in FIG. 1;
FIG. 3 is a development view of a tread rubber and a tread reinforcing layer in FIG. 1; and
FIG. 4 shows a profile of a tread portion in a 10 kPa state.

### DETAILED DESCRIPTION

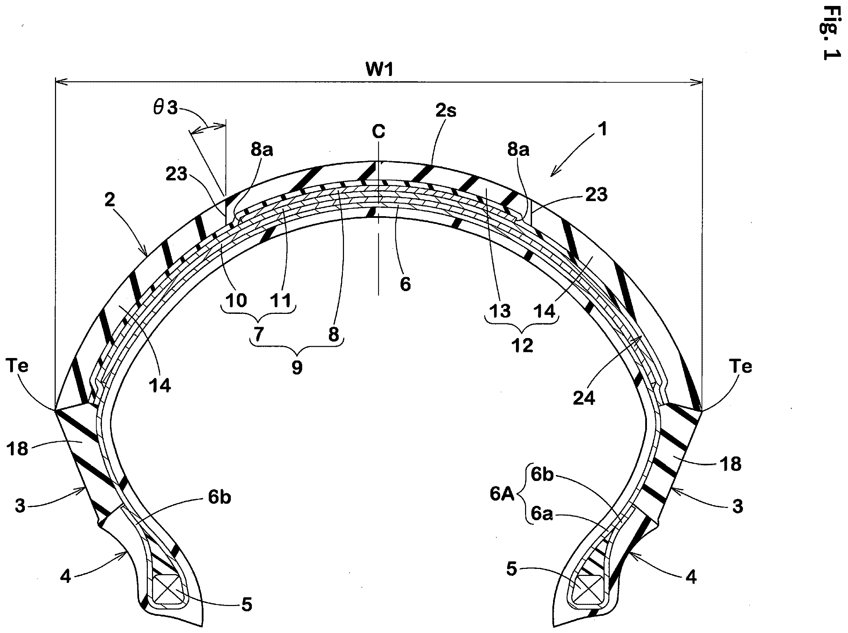

Hereinafter, one embodiment of the present invention will be described with reference to the drawings. FIG. 1 is a tire meridian cross-sectional view, of a motorcycle tire 1 (hereinafter simply referred to as "tire") of the present embodiment, including a tire rotation axis in a standardized state. The tire 1 of the present embodiment is a tire for the front wheel of a motorcycle, which is suitable for on-road sports driving. However, the tire 1 of the present invention is not limited to such a mode.

In the case of a pneumatic tire for which various standards are defined, the "standardized state" is a state where the tire is fitted on a standardized rim and inflated to a standardized internal pressure and no load is applied to the tire. In the case of a tire for which various standards are not defined, the standardized state means a standard use state, corresponding to the purpose of use of the tire, where the tire is not mounted on a vehicle and no load is applied to the tire. In the present specification, unless otherwise specified, dimensions and the like of components of the tire are values measured in the standardized state. In addition, dimensions of components (e.g., inner members of the tire 1) that cannot be measured in the standardized state are values measured in a state where the tire 1 is made to approximate the standardized state as much as possible.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 of the present embodiment includes a tread portion 2, a pair of sidewall portions 3, and a pair of bead portions 4. The sidewall portions 3 are connected to both sides in the tire axial direction of the tread portion 2. Each bead portion 4 is connected to the inner side in the tire radial direction of the sidewall portion 3. In the tread portion 2, a ground-contact surface 2s between one tread edge Te and another tread edge Te is curved in an arc shape that is convex outward in the tire radial direction, such that a sufficient ground-contact area is obtained even during cornering in which a camber angle is large. A bead core 5 is embedded in each bead portion 4.

Each tread edge Te corresponds to an end of the ground-contact surface 2s of the tread portion 2, and comes into contact with a road surface at least upon cornering at a maximum camber angle.

The tire 1 includes a carcass 6 extending on and between the pair of bead portions 4.

The carcass 6 includes, for example, a carcass ply 6A including a plurality of carcass cords. The carcass 6 of the present embodiment is composed of one carcass ply 6A, but may be composed of a plurality of stacked carcass plies. The carcass ply 6A includes a body portion 6a and turned-up portions 6b. The body portion 6a extends from the tread portion 2 through the sidewall portions 3 on both sides to the bead cores 5 in the bead portions 4 on both sides. Each turned-up portion 6b is connected to the body portion 6a and turned up from the inner side to the outer side in the tire axial direction around the bead core 5.

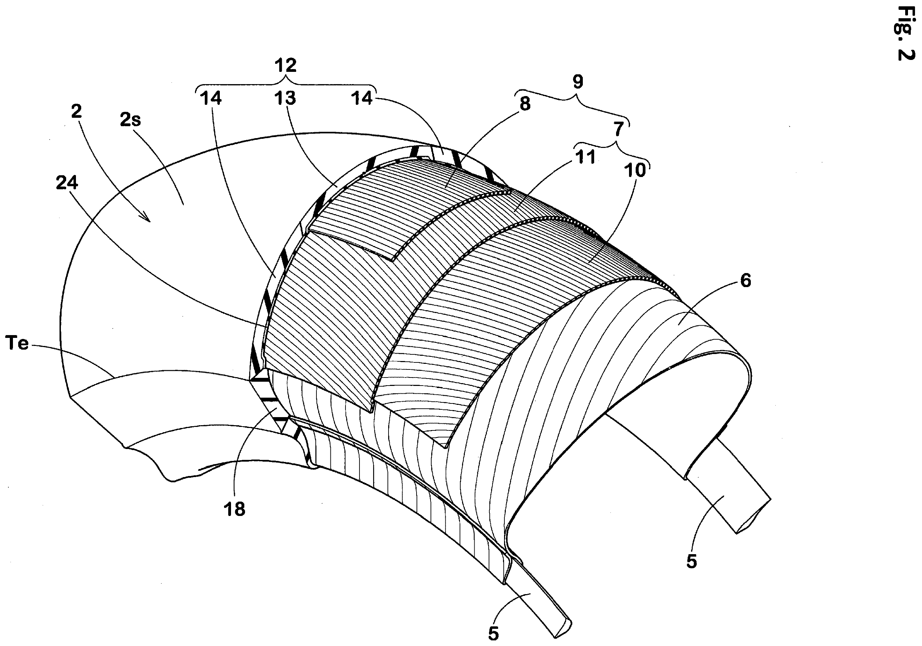

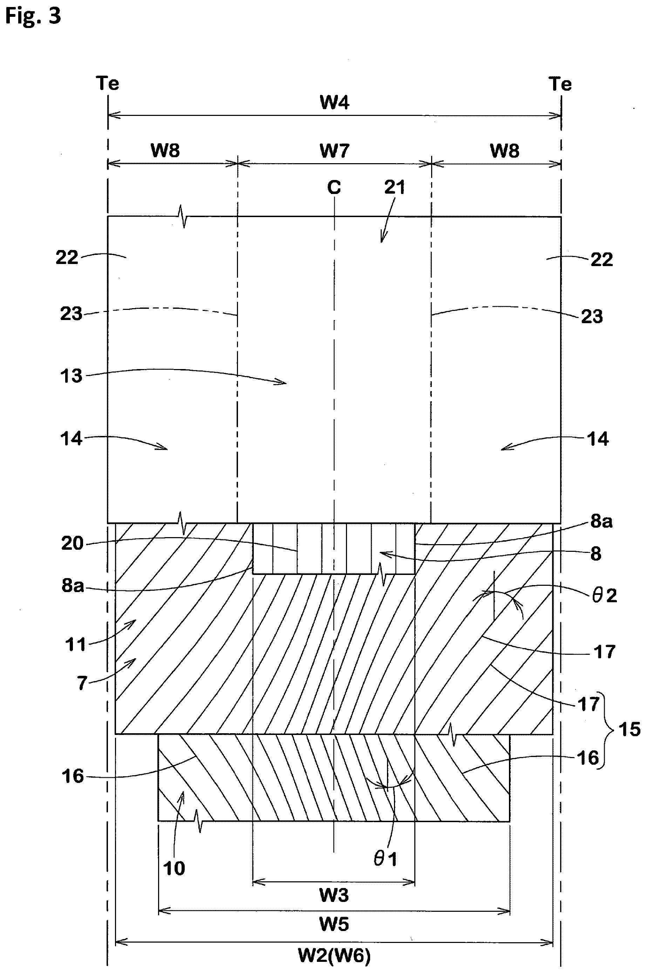

The tread portion 2 includes a tread reinforcing layer 9 placed outward of the carcass 6 in the tire radial direction, and a tread rubber 12 placed outward of the tread reinforcing layer 9 in the tire radial direction. The tread reinforcing layer 9 includes a belt layer 7 and a band layer 8 placed outward of the belt layer 7 in the tire radial direction. FIG. 2 shows an enlarged perspective view schematically showing inner members of the tire 1, and FIG. 3 shows a development view of the tread rubber 12 and the tread reinforcing layer 9 developed on a flat surface.

As shown in FIG. 2, the belt layer 7 is placed adjacent to the outer side in the tire radial direction of the carcass 6. In addition, the belt layer 7 is placed so as to reinforce substantially the entirety of the tread portion 2. Moreover, as shown in FIG. 3, the belt layer 7 includes a plurality of belt cords 15 inclined with respect to the tire circumferential direction. The angle of these belt cords 15 with respect to the tire circumferential direction is, for example, 10 to 40°. The belt layer 7 of the present embodiment includes a first belt ply 10 placed adjacent to the carcass 6, and a second belt ply 11 placed outward of the first belt ply 10 in the tire radial direction. In a more preferable mode, the belt layer 7 is composed of only these two belt plies.

The band layer 8 is placed at a center portion in the tire axial direction of the tread portion 2, and is placed so as to straddle at least a tire equator C. The band layer 8 includes at least one band cord 20 helically wound in the tire circumferential direction. The band layer 8 may include a plurality of wound band cords 20. Alternatively, the band layer 8 may be composed of a band cord 20 covered with a topping rubber, or may be composed of a band cord 20 not covered with a rubber and wound on a rubber sheet. The band layer 8 of the present embodiment is composed of, for example, a jointless band in which four band cords 20 covered with a topping rubber are helically wound. In the present invention, a development width W3 of the band layer 8 is smaller than a development width W2 of the belt layer 7. In the present embodiment, a development width W6 of the second belt ply 11 corresponds to the development width W2 of the belt layer 7. The above development width means a length in the tire axial direction when the band layer 8 or the belt layer 7 is developed on a flat surface. The same applies to the following description of the present specification.

As shown in FIG. 1, the tread rubber 12 includes a crown rubber 13 and shoulder rubbers 14. The crown rubber 13 is placed in a region including the tire equator C. Each shoulder rubber 14 is placed outward of the crown rubber 13 in the tire axial direction in a region including the tread edge Te. As a preferable mode, the shoulder rubber 14 is connected to the crown rubber 13. In addition, the shoulder rubber 14 is connected to a sidewall rubber 18.

In general, the temperature of the tread rubber 12 fluctuates during running due to various factors such as a running speed, a load on the tire 1, and a road surface temperature. For example, if the running speed is high, if the load on the tire 1 is large, or if the road surface temperature is high, the temperature of the tread rubber 12 may rise to about 100°C.

In view of such a situation, the tire 1 of the present invention has the following relationship between a hardness H, a complex elastic modulus E*, and a 300% modulus M300 of rubber at 100°C for the crown rubber 13 and each shoulder rubber 14. A hardness Hs at 100°C of the shoulder rubber 14 is higher than a hardness Hc at 100°C of the crown rubber 13. A complex elastic modulus E*s at 100°C of the shoulder rubber 14 is higher than a complex elastic modulus E*c at 100°C of the crown rubber 13. A 300% modulus M300s at 100°C of the shoulder rubber 14 is higher than a 300% modulus M300c at 100°C of the crown rubber 13.

The hardness H of rubber is a value measured with a type A durometer in accordance with JIS-K6253.

The complex elastic modulus E* is a value measured under the conditions shown below, in accordance with JIS-K6394 using a viscoelasticity spectrometer such as "EPLEXOR (registered trademark)" manufactured by NETZSCH-Gerätebau GmbH.
Initial strain: 10%
Amplitude: ±2.5%
Frequency: 10 Hz
Deformation mode: tensile

The 300% modulus M300 is a modulus at 300% elongation, and is a value measured in accordance with JIS-K6251 "Rubber, vulcanized or thermoplastic - Determination of tensile stress-strain properties".

As a result of adopting the above-described configuration, the tire 1 of the present invention can improve stability during braking and cornering performance. The reason for this is as follows.

In the present invention, the above-described band layer 8 increases the stiffness in the tire circumferential direction of the tread portion 2. Accordingly, radially outward growth of the region in which the crown rubber 13 is placed is effectively suppressed. Therefore, during straight running in which the tread rubber 12 (in this example, the crown rubber 13) in the region in which the band layer 8 is placed comes into contact with the ground, the band layer 8 improves stability during braking. Meanwhile, in the present invention, in the region outside of the band layer 8 in the tire axial direction, the belt layer 7 increases the stiffness in the tire axial direction of the tread portion 2. Accordingly, during cornering in which the tread rubber 12 (in this example, the shoulder rubber 14) in the region in which the band layer 8 is not placed comes into contact with the ground, the belt layer 7 can provide a large cornering force, so that excellent cornering performance is achieved.

Furthermore, the present inventor have found that by making the stiffness of each shoulder rubber 14 higher than the stiffness of the crown rubber 13, stability during braking and cornering performance are improved. That is, by making the stiffnesses of the respective rubbers different from each other as described above, the crown rubber 13 exhibits a high vibration absorption effect during braking to improve stability during braking. In addition, during cornering, the shoulder rubber 14 which forms a ground-contact surface provides a large reaction force to improve cornering performance.

In general, the stiffness of rubber can be specified by the complex elastic modulus E*. Meanwhile, as a result of various experiments, it has been found that as for the stiffnesses of each shoulder rubber 14 and the crown rubber 13, the above-described effects are not sufficiently obtained in a running state where the amount of deformation of the tread rubber 12 is small (e.g. low-speed running on general roads) or a in a running state where the amount of deformation of the tread rubber 12 is large (e.g., limit running on circuits, etc.) by merely specifying the complex elastic modulus E*.

In the present invention, not only the complex elastic modulus E* but also the hardness Hc at 100°C of the crown rubber 13 which forms the ground-contact surface 2s during straight running is specified, so that sufficient stability during braking is achieved even in a running state where the amount of deformation of the tread rubber 12 is small. Also, in the present invention, the 300% modulus M300 at 100°C is specified, so that sufficient cornering performance is achieved even in a running state where the amount of deformation of the tread rubber 12 which forms the ground-contact surface 2s is large due to heat generated by friction with a road surface during cornering. Thus, the tire 1 of the present invention can improve stability during braking and cornering performance in various situations.

Hereinafter, more detailed configurations of the present embodiment will be described. Each configuration described below shows a specific mode of the present embodiment. Therefore, it is needless to say that the present invention can achieve the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

### [Details of Belt Layer]

As shown in FIG. 3, each of a development width W5 of the first belt ply 10 and the development width W6 of the second belt ply 11 is 80% to 100% and preferably 90% to 95% of a development width W4 of the tread portion 2 (shown in FIG. 1). In addition, the development width W6 of the second belt ply 11 is preferably larger than the development width W5 of the first belt ply 10. Accordingly, damage starting from the vicinity of each end portion of the first belt ply 10 is suppressed, and the durability of the region in which each shoulder rubber 14 (shown in FIG. 1) is placed is improved. The development width W4 of the tread portion 2 corresponds to the distance in the tire axial direction from one tread edge Te to the other tread edge Te when the ground-contact surface 2s of the tread portion 2 is developed on a flat surface.

As shown in FIG. 3, the first belt ply 10 of the present embodiment includes a plurality of first belt cords 16 inclined in a first direction (downward toward the right side in FIG. 3) with respect to the tire circumferential direction. The second belt ply 11 includes a plurality of second belt cords 17 inclined in a second direction opposite to the first direction (upward toward the right side in FIG. 3) with respect to the tire circumferential direction. Owing to such arrangement of the belt cords, the tread portion 2 is firmly reinforced, and excellent cornering performance is exhibited.

The average of angles θ1 of the first belt cords 16 with respect to the tire circumferential direction is 10 to 40°. The average of the angles θ1 corresponds to a value obtained by dividing the sum of angles, with respect to the tire circumferential direction, of multiple micro regions into which the first belt cords 16 is divided and which have the same length, by the number of the micro regions. The same applies to the following description of the present specification. The length of each micro region is preferably not greater than 5 mm. In the present embodiment, by setting the first belt cords 16 at the above-described angle, straight running stability and cornering performance are improved in a well-balanced manner.

The maximum angle of the first belt cords 16 with respect to the tire circumferential direction at each end portion in the tire axial direction of the first belt ply 10 is larger than the maximum angle of the first belt cords 16 with respect to the tire circumferential direction on the tire equator C. In a more preferable mode, the average of the angles of the plurality of first belt cords 16 with respect to the tire circumferential direction in the region in which each shoulder rubber 14 is placed is larger than the average of the angles of the plurality of first belt cords 16 with respect to the tire circumferential direction in the region in which the crown rubber 13 is placed. Owing to such arrangement of the first belt cords 16, the stiffness in the tire circumferential direction is improved in the region in which the crown rubber 13 is placed, and the stiffness in the tire axial direction is improved in the region in which each shoulder rubber 14 is placed. Therefore, straight running stability and cornering performance are improved in a well-balanced manner.

The average of angles θ2 of the second belt cords 17 with respect to the tire circumferential direction is 10 to 40°. In addition, the maximum angle of the second belt cords 17 with respect to the tire circumferential direction at each end portion in the tire axial direction of the second belt ply 11 is larger than the maximum angle of the second belt cords 17 with respect to the tire circumferential direction on the tire equator C. In a more preferable mode, the average of the angles of the plurality of second belt cords 17 with respect to the tire circumferential direction in the region in which each shoulder rubber 14 is placed is larger than the average of the angles of the plurality of second belt cords 17 with respect to the tire circumferential direction in the region in which the crown rubber 13 is placed. Owing to such arrangement of the second belt cords 17, straight running stability and cornering performance are improved in a well-balanced manner.

The materials of the first belt cords 16 and the second belt cords 17 are not particularly limited, and, for example, organic fibers such as polyester fibers, nylon fibers, or aramid fibers are employed.

The first belt cords 16 and the second belt cords 17 of the present embodiment are each formed of a non-twisted single cord. Such belt cords are less likely to be stretched than twisted cords. Therefore, it is easy to generate a large reaction force linearly during cornering, so that steering stability can be improved.

### [Details of Band Layer]

The development width W3 of the band layer 8 is, for example, 20% to 80% of the development width W4 of the tread portion 2. In addition, the development width W3 of the band layer 8 is 20% to 60% of the development width W2 of the belt layer 7. Meanwhile, from the viewpoint of exerting a large cornering force even at a relatively small camber angle, preferably, the development width W3 of the band layer 8 is relatively small. From such a viewpoint, the development width W3 of the band layer 8 is preferably 20% to 50% and more preferably 20% to 40% of the development width W2 of the belt layer 7.

The breaking strength (which is the maximum stress at break) of the band cord 20 is preferably higher than the breaking strength of each belt cord 15. From such a viewpoint, the band cord 20 is preferably a steel cord. Accordingly, even when the development width W3 of the band layer 8 is small, straight running stability is reliably improved.

### [Details of Crown Rubber]

A development width W7 of a ground-contact surface 21 of the crown rubber 13 is preferably 80 to 120% of the development width W3 of the band layer 8. When the development width W7 of the ground-contact surface 21 of the crown rubber 13 is not less than 80% of the development width W3 of the band layer 8, during straight running, the band layer 8 can improve stability upon braking, and the crown rubber 13 which forms the ground-contact surface 2s can exhibit a high vibration absorption effect, so that stability during braking can be more effectively improved. When the development width W7 of the ground-contact surface 21 of the crown rubber 13 is not greater than 120% of the development width W3 of the band layer 8, the rubber volume of each shoulder rubber 14 can be sufficiently ensured, so that cornering performance can be further improved.

From the viewpoint of further effectively improving stability during braking, the development width W7 of the ground-contact surface 21 of the crown rubber 13 is preferably larger than the development width W3 of the band layer 8. When the development width W7 is larger than the development width W3, the ground-contact surface 2s is composed of only the ground-contact surface 21 of the crown rubber 13 during straight running. That is, the ground-contact surface 2s is formed by one rubber. Therefore, for example, as in the case where the ground-contact surface 2s is formed by two types of rubbers such as the crown rubber 13 and the shoulder rubber 14, the boundary between the rubbers (in this example, a boundary 23 between the crown rubber 13 and the shoulder rubber 14 described later) is not located at the ground-contact surface 2s, so that strain is less likely to occur at the ground-contact surface 2s during braking, which improves stability during braking.

From the viewpoint of adjusting the stiffness in the tire circumferential direction of the crown rubber 13 to be in an appropriate range, the hardness Hc at 100°C of the crown rubber 13 is preferably not less than 38 degrees and more preferably not less than 39 degrees, and is preferably not greater than 42 degrees and more preferably not greater than 41 degrees. The crown rubber 13 having such a hardness Hc is deformed moderately at 100°C, and the stiffness thereof is adjusted in an appropriate range, so that a braking force is effectively exerted and a high vibration absorption effect is exhibited.

From the same viewpoint, the complex elastic modulus E*c at 100°C of the crown rubber 13 is preferably not less than 2.1 MPa and more preferably not less than 2.3 MPa, and is preferably not greater than 2.7 MPa and more preferably not greater than 2.5 MPa. The crown rubber 13 having such a complex elastic modulus E*c has appropriate elasticity at 100°C, and the stiffness thereof is adjusted in an appropriate range, so that the same effects as those described above are exhibited.

From the same viewpoint, the 300% modulus M300c at 100°C of the crown rubber 13 is preferably not less than 4.0 MPa and more preferably not less than 4.2 MPa, and is preferably not greater than 4.8 MPa and more preferably not greater than 4.6 MPa. The crown rubber 13 having such a 300% modulus M300c has appropriate flexibility at 100°C, and the stiffness thereof is adjusted in an appropriate range, so that the same effects as those described above are exhibited.

As described above, in general, the temperature of the tread rubber 12 fluctuates during running due to a running speed, a load on the tire 1, a road surface temperature, etc. For example, if the running speed is low, if the load on the tire 1 is small, or if the road surface temperature is low, the temperature of the tread rubber 12 may indicate about 50°C. Therefore, more preferably, performance at 50°C is specified for each component of the tread rubber 12.

From the viewpoint of the above, a hardness Hc at 50°C of the crown rubber 13 is preferably not less than 44 degrees and more preferably not less than 45 degrees, and is preferably not greater than 48 degrees and more preferably not greater than 47 degrees. The stiffness of the crown rubber 13 having such a hardness Hc is adjusted in an appropriate range even at 50°C, so that a braking force is effectively exerted and a high vibration absorption effect is exhibited.

From the same viewpoint, a complex elastic modulus E*c at 50°C of the crown rubber 13 is preferably not less than 3.2 MPa and more preferably not less than 3.4 MPa, and is preferably not greater than 3.8 MPa and more preferably not greater than 3.6 MPa. Accordingly, the crown rubber 13 has appropriate elasticity at 50°C, and the stiffness thereof is adjusted in an appropriate range, so that the above-described effects can be expected.

### [Details of Shoulder Rubber]

As shown in FIG. 3, a development width W8 of a ground-contact surface 22 of each shoulder rubber 14 is preferably 60 to 90% of the development width W7 of the crown rubber 13. Accordingly, stability during braking and cornering performance can be improved in a well-balanced manner.

From the viewpoint of adjusting the stiffness in the tire axial direction of each shoulder rubber 14 at 100°C to be in an appropriate range, the hardness Hs at 100°C of the shoulder rubber 14 is preferably not less than 40 degrees and more preferably not less than 41 degrees, and is preferably not greater than 44 degrees and more preferably not greater than 43 degrees. Accordingly, the above-described effects can be exhibited, and controllability during cornering can also be improved.

From the same viewpoint, the complex elastic modulus E*s at 100°C of the shoulder rubber 14 is preferably not less than 2.4 MPa and more preferably not less than 2.6 MPa, and is preferably not greater than 3.0 MPa and more preferably not greater than 2.8 MPa. In addition, the 300% modulus M300s at 100°C of the shoulder rubber 14 is preferably not less than 4.7 MPa and more preferably not less than 4.9 MPa, and is preferably not greater than 5.5 MPa and more preferably not greater than 5.3 MPa. Accordingly, the stiffness of the shoulder rubber 14 is adjusted in an appropriate range, so that the above-described effects are reliably exhibited.

From the viewpoint of adjusting the stiffness in the tire axial direction of each shoulder rubber 14 at 50°C to be in an appropriate range as described above, a hardness Hs at 50°C of the shoulder rubber 14 is preferably not less than 47 degrees and more preferably not less than 48 degrees, and is preferably not greater than 51 degrees and more preferably not greater than 50 degrees. Such a shoulder rubber 14 is deformed moderately when the temperature of the shoulder rubber 14 is about 50°C which is a relatively low temperature, and the stiffness thereof is adjusted in an appropriate range, so that the same effects as those described above are exhibited.

From the same viewpoint, a complex elastic modulus E*s at 50°C of the shoulder rubber 14 is preferably not less than 4.0 MPa and more preferably not less than 4.2 MPa, and is preferably not greater than 4.6 MPa and more preferably not greater than 4.4 MPa. Such a shoulder rubber 14 has appropriate elasticity when the temperature of the shoulder rubber 14 is about 50°C which is a relatively low temperature, and the stiffness thereof is adjusted in an appropriate range, so that the same effects as those described above are exhibited.

### [Relationship between Crown Rubber and Shoulder Rubber]

From the viewpoint of adjusting the stiffnesses of the crown rubber 13 and each shoulder rubber 14 to be in an appropriate range when the load on the tire 1 is relatively low as described above, a hardness H, a complex elastic modulus E*, and a 300% modulus M300 of rubber at 50°C preferably have the following relationship. The hardness Hs at 50°C of the shoulder rubber 14 is higher than the hardness Hc at 50°C of the crown rubber 13. The complex elastic modulus E*s at 50°C of the shoulder rubber 14 is higher than the complex elastic modulus E*c at 50°C of the crown rubber 13. A 300% modulus M300s at 50°C of the shoulder rubber 14 is higher than a 300% modulus M300c at 50°C of the crown rubber 13. Such a tire 1 can improve stability during braking and cornering performance not only at about 100°C which is a relatively high temperature during running but also at about 50°C which is a relatively low temperature during running. Therefore, such a tire 1 can exhibit the above-described effects in accordance with the change in the running speed, the load on the tire 1, the road surface temperature, etc.

From the viewpoint of adjusting the stiffnesses of the crown rubber 13 and each shoulder rubber 14 at 100°C to be in an appropriate range, the hardness Hs at 100°C of the shoulder rubber 14 is preferably not less than 105% and more preferably not less than 110% of the hardness Hc at 100°C of the crown rubber 13, and is preferably not greater than 125% and more preferably not greater than 120% of the hardness Hc at 100°C of the crown rubber 13. The stiffnesses of such crown rubber 13 and shoulder rubber 14 are appropriately balanced, so that stability during braking and cornering performance are improved in a well-balanced manner.

From the same viewpoint, the complex elastic modulus E*s at 100°C of the shoulder rubber 14 is preferably not less than 105% and more preferably not less than 110% of the complex elastic modulus E*c at 100°C of the crown rubber 13, and is preferably not greater than 150% and more preferably not greater than 140% of the complex elastic modulus E*c at 100°C of the crown rubber 13. The stiffnesses of such crown rubber 13 and shoulder rubber 14 are appropriately balanced, so that stability during braking and cornering performance are improved in a well-balanced manner.

From the same viewpoint, the 300% modulus M300s at 100°C of the shoulder rubber 14 is preferably not less than 105% and more preferably not less than 110% of the 300% modulus M300c at 100°C of the crown rubber 13, and is preferably not greater than 150% and more preferably not greater than 140% of the 300% modulus M300c at 100°C of the crown rubber 13. The stiffnesses of such crown rubber 13 and shoulder rubber 14 are appropriately balanced, so that stability during braking and cornering performance are improved in a well-balanced manner.

From the viewpoint of adjusting the stiffnesses of the crown rubber 13 and each shoulder rubber 14 at 50°C to be in an appropriate range, the hardness Hs at 50°C of the shoulder rubber 14 is preferably not less than 105% and more preferably not less than 110% of the hardness Hc at 50°C of the crown rubber 13, and is preferably not greater than 125% and more preferably not greater than 120% of the hardness Hc at 50°C of the crown rubber 13. The stiffnesses of such crown rubber 13 and shoulder rubber 14 are appropriately balanced, so that stability during braking and cornering performance are improved in a well-balanced manner.

From the same viewpoint, the complex elastic modulus E*s at 50°C of the shoulder rubber 14 is preferably not less than 105% and more preferably not less than 110% of the complex elastic modulus E*c at 50°C of the crown rubber 13, and is preferably not greater than 150% and more preferably not greater than 140% of the complex elastic modulus E*c at 50°C of the crown rubber 13. The stiffnesses of such crown rubber 13 and shoulder rubber 14 are appropriately balanced, so that stability during braking and cornering performance are improved in a well-balanced manner.

From the same viewpoint, the 300% modulus M300s at 50°C of the shoulder rubber 14 is preferably not less than 105% and more preferably not less than 110% of the 300% modulus M300c at 50°C of the crown rubber 13, and is preferably not greater than 150% and more preferably not greater than 140% of the 300% modulus M300c at 50°C of the crown rubber 13. The stiffnesses of such crown rubber 13 and shoulder rubber 14 are appropriately balanced, so that stability during braking and cornering performance are improved in a well-balanced manner.

In general, it is known that a rubber having a large loss tangent tanδ has excellent heat generation properties and can provide a large grip force. Based on such a technical matter, a loss tangent tanδs at 100°C of each shoulder rubber 14 is preferably higher than a loss tangent tanδc at 100°C of the crown rubber 13. Such a shoulder rubber 14 can provide a large grip force even when the temperature of the shoulder rubber 14 rises to about 100°C due to friction with a road surface during cornering, so that steering stability can be maintained. In addition, heat generation of such a crown rubber 13 is moderately suppressed, so that stability during high speed running is maintained high.

The loss tangent tanδ is a value measured under the conditions shown below, in accordance with the standards of JIS-K6394 using the above-described viscoelasticity spectrometer.
Initial strain: 5%
Amplitude: ±1%
Frequency: 10 Hz
Deformation mode: stretch

A loss tangent tanδs at 50°C of each shoulder rubber 14 is preferably higher than a loss tangent tanδc at 50°C of the crown rubber 13. Such a shoulder rubber 14 can provide a large grip force even when the temperature of the shoulder rubber 14 rises only to about 50°C due to friction with a road surface, etc., during cornering, so that steering stability can be maintained. In addition, heat generation of such a crown rubber 13 is moderately suppressed, so that stability during high speed running is maintained high.

The characteristics of each rubber described above can be obtained by combining known rubber materials and known production methods as appropriate.

From the viewpoint of making the stiffness of each shoulder rubber 14 higher than the stiffness of the crown rubber 13, the amount of carbon added to the crown rubber 13 is preferably smaller than the amount of carbon added to the shoulder rubber 14. Such a tire 1 can improve stability during braking and cornering performance.

### [Details of Boundary]

As shown in FIG. 1, the crown rubber 13 of the present embodiment extends with a substantially constant thickness in the region outside of the band layer 8 in the tire radial direction. In addition, each shoulder rubber 14 of the present embodiment extends with a substantially constant thickness on the outer side of the first belt ply 10 in the tire radial direction. Each of the tread rubber 12, the crown rubber 13, and the shoulder rubbers 14 is not limited to such a mode, and, for example, each shoulder rubber 14 may extend such that the thickness thereof decreases with decreasing distance to the tread edge Te. Extending with a substantially constant thickness allows for unavoidable errors in rubber products such as a tire, and includes a mode in which the difference between the maximum and minimum values of the thickness of a rubber layer is not greater than 5% of the maximum value.

In the present embodiment, in a tire meridian cross-section, the boundary 23 between the crown rubber 13 and the shoulder rubber 14 has a linear shape along the tire radial direction. In addition, the boundary 23 extends in the tire circumferential direction while maintaining this shape. The boundary 23 is preferably inclined with respect to a tire normal line orthogonal to the ground-contact surface 2s. An angle θ3 of the boundary 23 with respect to the tire normal line is preferably 20 to 70° and more preferably 20 to 40°. When the angle θ3 is 20 to 70°, a large cross-sectional length of the boundary 23 can be ensured, so that separation between the crown rubber 13 and the shoulder rubber 14 can be suppressed. When the angle θ3 is 20 to 40°, during straight running, the ground-contact surface 2s is composed of only the ground-contact surface 21 of the crown rubber 13, and the boundary 23 is not located at the ground-contact surface 2s. Accordingly, strain is less likely to occur at the ground-contact surface 2s during braking, which improves stability during braking. The boundary 23 is not limited to such a mode, and may have a curved shape, for example.

The boundary 23 between the crown rubber 13 and the shoulder rubber 14 is formed on each of both sides of the tire equator C. These two boundaries 23 are preferably arranged so as to be symmetrical with respect to the tire equator C. Such a tire 1 has excellent balance performance between left cornering and right cornering, and can further improve cornering performance.

In the present embodiment, the boundary 23 between the crown rubber 13 and each shoulder rubber 14 is located on the tread edge Te side with respect to an end 8a in the tire axial direction of the band layer 8. Owing to such arrangement of the boundary 23, the crown rubber 13 covers the entire band layer 8, so that stability during braking can be further improved.

### [Base Rubber]

The tread portion 2 of the present embodiment includes a base rubber 24 placed between the tread reinforcing layer 9 and the tread rubber 12. The base rubber 24 is adjacent to the crown rubber 13 and each shoulder rubber 14.

Preferably, a hardness at 100°C of such a base rubber 24 is higher than the hardness Hc at 100°C of the crown rubber 13 and lower than the hardness Hs at 100°C of the shoulder rubber 14. Accordingly, the adhesiveness of the tread rubber 12 is made uniform, so that the tread rubber 12 can be inhibited from being peeled from the tread reinforcing layer 9.

From the same viewpoint, preferably, a complex elastic modulus at 100°C of the base rubber 24 is higher than the complex elastic modulus E*c at 100°C of the crown rubber 13 and lower than the complex elastic modulus E*s at 100°C of the shoulder rubber 14. In addition, preferably, a 300% modulus at 100°C of the base rubber 24 is higher than the 300% modulus M300c at 100°C of the crown rubber 13 and lower than the 300% modulus M300s at 100°C of the shoulder rubber 14.

### [Radius of Curvature of Profile]

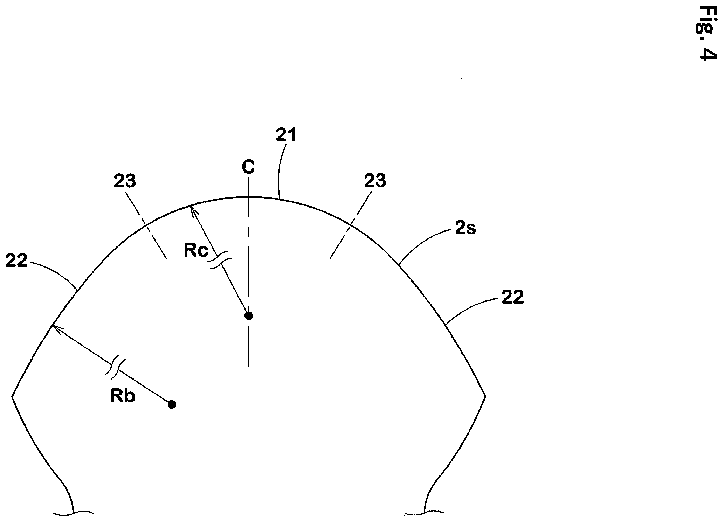

FIG. 4 shows a profile of the tread portion 2 in a tire meridian cross-section in a 10 kPa state where the tire 1 is fitted on the standardized rim and inflated to an internal pressure of 10 kPa. As shown in FIG. 4, in the 10 kPa state, a radius of curvature Rc of the ground-contact surface 21 of the crown rubber 13 (shown in FIG. 1) is less than 95% of a tire cross-sectional width W1 (shown in FIG. 1), and a radius of curvature Rb of the ground-contact surface 22 of each shoulder rubber 14 (shown in FIG. 1) is larger than the radius of curvature Rc. The tire cross-sectional width W1 corresponds to a width in the tire axial direction in the standardized state.

As described above, the profile of the tread portion 2 is specified in the 10 kPa state, and the radius of curvature Rc of the ground-contact surface 21 of the crown rubber 13 is relatively small. Even when such a tire 1 is inflated to the standardized internal pressure and radially outward growth of the region in which each shoulder rubber 14 is placed occurs, the change in the radius of curvature of the ground-contact surface 2s of the tread portion 2 occurs mainly in the region in which the crown rubber 13 is placed, and the change in the radius of curvature Rb of the ground-contact surface 22 of the shoulder rubber 14 is less likely to occur. Therefore, the radius of curvature Rb of the ground-contact surface 22 of the shoulder rubber 14 is appropriately maintained without becoming excessively large, so that cornering performance can be maintained.

The motorcycle tire of one embodiment of the present invention has been described in detail above.

### EXAMPLES

Motorcycle tires (front wheel tires) with a size of 120/70ZR17 having the basic structure shown in FIG. 1 were produced based on specifications in Table 1. As a comparative example, a tire in which only one type of rubber was placed as a tread rubber in a tread portion without any distinction between a crown rubber and a shoulder rubber (in Table 1, the hardnesses, the complex elastic moduli, and the 300% moduli of the crown rubber and the shoulder rubber are the same as each other) was produced as a test tire. The tire of the comparative example has substantially the same configuration as the tire of each Example, except for the matters described above. Each test tire was evaluated for stability during braking and cornering performance. The common specifications and test methods for each test tire are as follows.
Rim size: MT3.50×17
Tire internal pressure: 250 kPa
Test vehicle: engine displacement of 1000 cc
Development width W5 of first belt ply: 140 mm
Development width W6 of second belt ply: 150 mm
Development width W3 of band layer: 60 mm

### <Stability during Braking>

Using the above test vehicle, stability during braking was evaluated when full braking was applied in a state of running straight at 220 km/h on an asphalt road surface. The results are indicated as scores with the result of the comparative example as 100. A higher value indicates that the stability during braking is better.

### <Cornering Performance>

Cornering performance was evaluated when the above test vehicle ran on a mountain road having an asphalt road surface. The cornering performance was evaluated based on the overall evaluation of turning response in corners, the degree of freedom during cornering, the front wheel turn-in characteristics, etc. The results are indicated as scores with the result of the comparative example as 100. A higher value indicates that these evaluation items are better.

The results of the tests are shown in Table 1.

**[Table 1]**

| | Comp. Ex. | Ex. 1 | Ex. 2 | Ex. 3 | Ex. 4 | Ex. 5 | Ex. 6 |
|---|---|---|---|---|---|---|---|
| Development width W7 of ground-contact surface of crown rubber/development width W3 of band layer (%) | - | 80 | 120 | 100 | 120 | 100 | 100 |
| Relationship between loss tangent tanδc of crown rubber and loss tangent tanδs of shoulder rubber | - | tanδc > tanδs | | tanδc < tanδs | | | |
| Hardness Hc of crown rubber at 100°C | 45 | 40 | 40 | 38 | 40 | 40 | 42 |
| Complex elastic modulus E*c of crown rubber at 100°C | 3.0 | 2.4 | 2.4 | 2.1 | 2.4 | 2.4 | 2.7 |
| 300% modulus M300c of crown rubber at 100°C | 5.2 | 4.5 | 4.5 | 4.0 | 4.5 | 4.5 | 4.8 |
| Hardness Hs of shoulder rubber at 100°C | 45 | 42 | 42 | 40 | 42 | 42 | 44 |
| Complex elastic modulus E*s of shoulder rubber at 100°C | 3.0 | 2.7 | 2.7 | 2.4 | 2.7 | 2.7 | 3.0 |
| 300% modulus M300s of shoulder rubber at 100°C | 5.2 | 5.0 | 5.0 | 4.7 | 5.0 | 5.0 | 5.5 |
| Stability during braking (score) | 100 | 120 | 120 | 120 | 120 | 140 | 105 |
| Cornering performance (score) | 100 | 120 | 120 | 105 | 140 | 140 | 120 |

As a result of the test, it is confirmed that the tire of each Example can improve stability during braking and cornering performance.

### [Additional Note]

The present invention includes the following aspects as claimed.

## Claims

1. A motorcycle tire (1) comprising:
a tread portion (2);
a pair of sidewall portions (3);
a pair of bead portions (4); and
a carcass (6) extending on and between the pair of bead portions (4), wherein
the tread portion (2) includes a tread reinforcing layer (9) placed outward of the carcass (6) in a tire radial direction, and a tread rubber (12) placed outward of the tread reinforcing layer (9) in the tire radial direction,
the tread reinforcing layer (9) includes a belt layer (7) including a plurality of belt cords (15) inclined with respect to a tire circumferential direction, and a band layer (8) placed outward of the belt layer (7) in the tire radial direction and including at least one band cord (20) helically wound in the tire circumferential direction,
a development width (W3) of the band layer (8) is smaller than a development width (W2) of the belt layer (7),
the tread rubber (12) includes a crown rubber (13) placed in a region including a tire equator (C), and shoulder rubbers (14) each placed outward of the crown rubber (13) in a tire axial direction in a region including a tread edge (Te),
a hardness (Hs) at 100°C of each shoulder rubber (14) is higher than a hardness (Hc) at 100°C of the crown rubber (13),
a complex elastic modulus (E*s) at 100°C of each shoulder rubber (14) is higher than a complex elastic modulus (E*c) at 100°C of the crown rubber (13), and
a 300% modulus (M300s) at 100°C of each shoulder rubber (14) is higher than a 300% modulus (M300c) at 100°C of the crown rubber (13),
wherein the hardness H is measured with a type A durometer in accordance with JIS-K6253 and the complex elastic modulus E* is measured in accordance with JIS-K6394 in tensile deformation mode at an initial strain of 10%, at an amplitude of ±2.5% and at a frequency of 10 Hz and
the 300% modulus M300 is measured in accordance with JIS-K6251 at 300% elongation.

2. The motorcycle tire (1) according to claim 1, wherein a loss tangent (tanδs) at 100°C of each shoulder rubber (14) is higher than a loss tangent (tanδc) at 100°C of the crown rubber (13),
wherein the loss tangent (tanδs) at 100°C of each shoulder rubber (14) and the loss tangent (tanδc) at 100°C of the crown rubber (13) are measured according to JIS-K6394 in deformation mode stretch at an initial strain of 5%, at an amplitude of ±1% and at a frequency of 10 Hz.

3. The motorcycle tire (1) according to claim 1 or 2, wherein
a hardness (Hs) at 50°C of each shoulder rubber (14) is higher than a hardness (Hc) at 50°C of the crown rubber (13),),
wherein the hardness H is measured with a type A durometer in accordance with JIS-K6253,
a complex elastic modulus (E*s) at 50°C of each shoulder rubber (14) is higher than a complex elastic modulus (E*c) at 50°C of the crown rubber (13), and
a 300% modulus (M300s) at 50°C of each shoulder rubber (14) is higher than a 300% modulus (M300c) at 50°C of the crown rubber (13),
wherein the complex elastic modulus E*
is measured in accordance with JIS-K6394 in tensile deformation mode at an initial strain of 10%, at an amplitude of ±2.5% and at a frequency of 10 Hz and
the 300% modulus M300 is measured in accordance with JIS-K6251 at 300% elongation.

4. The motorcycle tire (1) according to any one of claims 1 to 3, wherein a loss tangent (tanδs) at 50°C of each shoulder rubber (14) is higher than a loss tangent (tanδc) at 50°C of the crown rubber (13),
wherein the loss tangent (tanδs) at 50°C of each shoulder rubber (14) and the loss tangent (tanδc) at 50°C of the crown rubber (13) are measured according to JIS-K6394 in deformation mode stretch at an initial strain of 5%, at an amplitude of ±1% and at a frequency of 10 Hz.

5. The motorcycle tire (1) according to any one of claims 1 to 4, wherein
the hardness (Hc) at 100°C of the crown rubber (13) is 38 to 42 degrees,
the complex elastic modulus (E*c) at 100°C of the crown rubber (13) is 2.1 to 2.7 MPa, and
the 300% modulus (M300c) at 100°C of the crown rubber (13) is 4.0 to 4.8 MPa.

6. The motorcycle tire (1) according to any one of claims 1 to 5, wherein
the hardness (Hs) at 100°C of each shoulder rubber (14) is 40 to 44 degrees,
the complex elastic modulus (E*s) at 100°C of each shoulder rubber (14) is 2.4 to 3.0 MPa, and
the 300% modulus (M300s) at 100°C of each shoulder rubber (14) is 4.7 to 5.5 MPa.

7. The motorcycle tire (1) according to any one of claims 1 to 6, wherein
the hardness (Hc) at 50°C of the crown rubber (13) is 44 to 48 degrees, and
the complex elastic modulus (E*c) at 50°C of the crown rubber (13) is 3.2 to 3.8 MPa,
wherein the hardness (Hc) at 50°C
is measured with a type A durometer in accordance with JIS-K6253
and the complex elastic modulus (E*c) at 50°C of the crown rubber (13)
is measured in accordance with JIS-K6394 in tensile deformation mode at an initial strain of 10%, at an amplitude of ±2.5% and at a frequency of 10 H z.

8. The motorcycle tire (1) according to any one of claims 1 to 7, wherein
the hardness (Hs) at 50°C of each shoulder rubber (14) is 47 to 51 degrees, and
the complex elastic modulus (E*s) at 50°C of each shoulder rubber (14) is 4.0 to 4.6 MPa,
wherein the hardness (Hs) at 50°C is measured with a type A durometer in accordance with JIS-K6253
and the complex elastic modulus (E*s) at 50°C of each shoulder rubber (14)
is measured in accordance with JIS-K6394 in tensile deformation mode at an initial strain of 10%, at an amplitude of ±2.5% and at a frequency of 10 Hz.

9. The motorcycle tire (1) according to any one of claims 1 to 8, wherein, in a tire meridian cross-section in a 10 kPa state where the motorcycle tire (1) is fitted on a standardized rim and inflated to an internal pressure of 10 kPa,
a radius of curvature Rc of a ground-contact surface (21) of the crown rubber (13) is less than 95% of a tire cross-sectional width (W1), and
a radius of curvature Rb of a ground-contact surface (22) of each shoulder rubber (14) is larger than the radius of curvature Rc.

10. The motorcycle tire (1) according to any one of claims 1 to 9, wherein a development width (W7) of the ground-contact surface (21) of the crown rubber (13) is 80 to 120% of the development width (W3) of the band layer (8).

11. The motorcycle tire (1) according to any one of claims 1 to 9, wherein a development width (W7) of the ground-contact surface (21) of the crown rubber (13) is larger than the development width (W3) of the band layer (8).

## Patentansprüche

1. Motorradreifen (1), umfassend:
einen Laufstreifenabschnitt (2);
ein Paar Seitenwandabschnitte (3);
ein Paar Wulstabschnitte (4); und
eine Karkasse (6), die sich auf und zwischen dem Paar Wulstabschnitte (4) erstreckt, wobei
der Laufstreifenabschnitt (2) eine Laufstreifenverstärkungsschicht (9), die in einer Reifenradialrichtung außerhalb der Karkasse (6) angeordnet ist, und einen Laufstreifenkautschuk (12), der in der Reifenradialrichtung außerhalb der Laufstreifenverstärkungsschicht (9) angeordnet ist, umfasst,
die Laufstreifenverstärkungsschicht (9) eine Gürtelschicht (7), die eine Mehrzahl an Gürtelkorden (15) umfasst, die in Bezug auf eine Reifenumfangsrichtung geneigt sind, und eine Bandschicht (8), die in der Reifenradialrichtung außerhalb der Gürtelschicht (7) angeordnet ist und mindestens einen Bandkord (20) umfasst, der in der Reifenumfangsrichtung schraubenförmig gewickelt ist, umfasst,
eine Abwicklungsbreite (W3) der Bandschicht (8) kleiner als eine Abwicklungsbreite (W2) der Gürtelschicht (7) ist,
der Laufstreifenkautschuk (12) einen Kronenkautschuk (13), der in einem den Reifenäquator (C) umfassenden Bereich angeordnet ist, und Schulterkautschuke (14) umfasst, die jeweils in einer Reifenaxialrichtung außerhalb des Kronenkautschuks (13) in einem die Laufstreifenkante (Te) umfassenden Bereich angeordnet sind,
eine Härte (Hs) bei 100 °C jedes Schulterkautschuks (14) höher als eine Härte (Hc) bei 100 °C des Kronenkautschuks (13) ist,
ein komplexer Elastizitätsmodul (E*s) bei 100 °C jedes Schulterkautschuks (14) höher als ein komplexer Elastizitätsmodul (E*c) bei 100 °C des Kronenkautschuks (13) ist, und
ein 300%-Modul (M300s) bei 100 °C jedes Schulterkautschuks (14) höher als ein 300%-Modul (M300c) bei 100 °C des Kronenkautschuks (13) ist,
wobei die Härte H mit einem Typ-A-Durometer gemäß JIS-K6253 gemessen ist und
der komplexe Elastizitätsmodul E* gemäß JIS-K6394 in Zugverformungsmodus bei einer Anfangsdehnung von 10 %, bei einer Amplitude von ±2,5 % und bei einer Frequenz von 10 Hz gemessen wird, und
der 300%-Modul M300 gemäß JIS-K6251 bei 300 % Dehnung gemessen ist.

2. Motorradreifen (1) nach Anspruch 1, wobei ein Verlusttangens (tanδs) bei 100 °C jedes Schulterkautschuks (14) höher als ein Verlusttangens (tanδc) bei 100 °C des Kronenkautschuks (13) ist,
wobei der Verlusttangens (tanδs) bei 100 °C jedes Schulterkautschuks (14) und der Verlusttangens (tanδc) bei 100 °C des Kronenkautschuks (13) gemäß JIS-K6394 im Verformungsmodus Streckung bei einer Anfangsdehnung von 5 %, bei einer Amplitude von ±1 % und bei einer Frequenz von 10 Hz gemessen sind.

3. Motorradreifen (1) nach Anspruch 1 oder 2, wobei
eine Härte (Hs) bei 50 °C jedes Schulterkautschuks (14) höher als eine Härte (Hc) bei 50 °C des Kronenkautschuks (13) ist,
wobei die Härte H mit einem Typ-A-Durometer gemäß JIS-K6253 gemessen ist,
ein komplexer Elastizitätsmodul (E*s) bei 50 °C jedes Schulterkautschuks (14) höher als ein komplexer Elastizitätsmodul (E*c) bei 50 °C des Kronenkautschuks (13) ist, und
ein 300%-Modul (M300s) bei 50 °C jedes Schulterkautschuks (14) höher als ein 300%-Modul (M300c) bei 50 °C des Kronenkautschuks (13) ist,
wobei der komplexe Elastizitätsmodul E*
gemäß JIS-K6394 in Zugverformungsmodus bei einer Anfangsdehnung von 10 %, bei einer Amplitude von ±2,5 % und bei einer Frequenz von 10 Hz gemessen ist und
der 300%-Modul M300 gemäß JIS-K6251 bei 300 % Dehnung gemessen ist.

4. Motorradreifen (1) nach einem der Ansprüche 1 bis 3, wobei ein Verlusttangens (tanδs) bei 50 °C jedes Schulterkautschuks (14) höher als ein Verlusttangens (tanδc) bei 50 °C des Kronenkautschuks (13) ist,
wobei der Verlusttangens (tanδs) bei 50 °C jedes Schulterkautschuks (14) und der Verlusttangens (tanδc) bei 50 °C des Kronenkautschuks (13) gemäß JIS-K6394 im Verformungsmodus Streckung bei einer Anfangsdehnung von 5 %, bei einer Amplitude von ±1 % und bei einer Frequenz von 10Hz gemessen sind.

5. Motorradreifen (1) nach einem der Ansprüche 1 bis 4, wobei
die Härte (Hc) bei 100 °C des Kronenkautschuks (13) 38 bis 42 Grad beträgt,
der komplexe Elastizitätsmodul (E*c) bei 100 °C des Kronenkautschuks (13) 2,1 bis 2,7 MPa beträgt, und
der 300%-Modul (M300c) bei 100 °C des Kronenkautschuks (13) 4,0 bis 4,8 MPa beträgt.

6. Motorradreifen (1) nach einem der Ansprüche 1 bis 5, wobei
die Härte (Hs) bei 100 °C jedes Schulterkautschuks (14) 40 bis 44 Grad beträgt,
der komplexe Elastizitätsmodul (E*s) bei 100 °C jedes Schulterkautschuks (14) 2,4 bis 3,0 MPa beträgt, und
der 300%-Modul (M300s) bei 100 °C jedes Schulterkautschuks (14) 4,7 bis 5,5 MPa beträgt.

7. Motorradreifen (1) nach einem der Ansprüche 1 bis 6, wobei
die Härte (Hc) bei 50 °C des Kronenkautschuks (13) 44 bis 48 Grad beträgt, und
der komplexe Elastizitätsmodul (E*c) bei 50 °C des Kronenkautschuks (13) 3,2 bis 3,8 MPa beträgt,
wobei die Härte (Hc) bei 50 °C
mit einem Typ-A-Durometer gemäß JIS-K6253 gemessen ist,
und der komplexe Elastizitätsmodul (E*c) bei 50 °C des Kronenkautschuks (13)
gemäß JIS-K6394 in Zugverformungsmodus bei einer Anfangsdehnung von 10 %, bei einer Amplitude von ±2,5 % und bei einer Frequenz von 10 Hz gemessen ist.

8. Motorradreifen (1) nach einem der Ansprüche 1 bis 7, wobei
die Härte (Hs) bei 50 °C jedes Schulterkautschuks (14) 47 bis 51 Grad beträgt, und
der komplexe Elastizitätsmodul (E*s) bei 50 °C jedes Schulterkautschuks (14) 4,0 bis 4,6 MPa beträgt,
wobei die Härte (Hs) bei 50 °C mit einem Typ-A-Durometer gemäß JIS-K6253 gemessen ist,
und der komplexe Elastizitätsmodul (E*s) bei 50 °C jedes Schulterkautschuks (14)
gemäß JIS-K6394 in Zugverformungsmodus bei einer Anfangsdehnung von 10 %, bei einer Amplitude von ±2,5 % und bei einer Frequenz von 10 Hz gemessen ist.

9. Motorradreifen (1) nach einem der Ansprüche 1 bis 8, wobei in einem Reifenmeridianquerschnitt in einem Zustand bei 10 kPa, in dem der Motorradreifen (1) auf eine genormte Felge aufgezogen und auf einen Innendruck von 10 kPa aufgepumpt ist,
ein Krümmungsradius Rc einer Bodenkontaktfläche (21) des Kronenkautschuks (13) kleiner als 95 % einer Reifenquerschnittsbreite (W1) ist, und
ein Krümmungsradius Rb einer Bodenkontaktfläche (22) jedes Schulterkautschuks (14) größer als der Krümmungsradius Rc ist.

10. Motorradreifen (1) nach einem der Ansprüche 1 bis 9, wobei eine Abwicklungsbreite (W7) der Bodenkontaktfläche (21) des Kronenkautschuks (13) 80 bis 120 % der Abwicklungsbreite (W3) der Bandschicht (8) beträgt.

11. Motorradreifen (1) nach einem der Ansprüche 1 bis 9, wobei eine Abwicklungsbreite (W7) der Bodenkontaktfläche (21) des Kronenkautschuks (13) größer als die Abwicklungsbreite (W3) der Bandschicht (8) ist.

## Revendications

1. Pneumatique pour motocyclette (1) comprenant :
une portion formant bande de roulement (2) ;
une paire de portions formant parois latérales (3) ;
une paire de portions de talon (4) ; et
une carcasse (6) s'étendant sur et entre la paire de portions de talon (4), dans lequel
la portion formant bande de roulement (2) inclut une couche de renforcement de bande de roulement (9) placée à l'extérieur de la carcasse (6) dans une direction radiale du pneumatique, et un caoutchouc de bande de roulement (12) placé à l'extérieur de la couche de renforcement de bande de roulement (9) dans la direction radiale du pneumatique,
la couche de renforcement de bande de roulement (9) inclut une couche de ceinture (7) incluant une pluralité de câblés de ceinture (15) inclinés par rapport à une direction circonférentielle du pneumatique, et une couche de bande (8) placée à l'extérieur de la couche de ceinture (7) dans la direction radiale du pneumatique et incluant au moins un câblé de bande (20) enroulé de manière hélicoïdale dans la direction circonférentielle du pneumatique, une largeur de développement (W3) de la couche de bande (8) est inférieure à une largeur de développement (W2) de la couche de ceinture (7),
le caoutchouc de bande de roulement (12) inclut un caoutchouc de couronne (13) placé dans une région incluant un équateur de pneumatique (C), et des caoutchoucs d'épaulement (14) placés chacun à l'extérieur du caoutchouc de couronne (13) dans une direction axiale du pneumatique dans une région incluant un bord de bande de roulement (Te), une dureté (Hs) à 100 °C de chaque caoutchouc d'épaulement (14) est supérieure à une dureté (Hc) à 100 °C du caoutchouc de couronne (13),
un module d'élasticité complexe (E*s) à 100 °C de chaque caoutchouc d'épaulement (14) est supérieur à un module d'élasticité complexe (E*c) à 100 °C du caoutchouc de couronne (13), et
un module à 300 % (M300s) à 100 °C de chaque caoutchouc d'épaulement (14) est supérieur à un module à 300 % (M300c) à 100 °C du caoutchouc de couronne (13),
dans lequel la dureté H est mesurée avec un duromètre de type A conformément à la norme industrielle japonaise JIS-K6253 et
le module d'élasticité complexe E* est mesuré conformément à la norme industrielle japonaise JIS-K6394 en mode de déformation en traction à une contrainte initiale de 10 %, à une amplitude de ± 2,5 % et à une fréquence de 10 Hz, et
le module à 300 % M300 est mesuré conformément à la norme industrielle japonaise JIS-K6251 à 300 % d'allongement.

2. Pneumatique pour motocyclette (1) selon la revendication 1, dans lequel une tangente de perte (tanδs) à 100 °C de chaque caoutchouc d'épaulement (14) est supérieure à une tangente de perte (tanδc) à 100 °C du caoutchouc de couronne (13),
dans lequel la tangente de perte (tanδs) à 100 °C de chaque caoutchouc d'épaulement (14) et la tangente de perte (tanδc) à 100 °C du caoutchouc de couronne (13) sont mesurées conformément à la norme industrielle japonaise JIS-K6394 en mode de déformation en étirement à une contrainte initiale de 5 %, à une amplitude de ± 1 % et à une fréquence de 10 Hz.

3. Pneumatique pour motocyclette (1) selon la revendication 1 ou 2, dans lequel
une dureté (Hs) à 50 °C de chaque caoutchouc d'épaulement (14) est supérieure à une dureté (Hc) à 50 °C du caoutchouc de couronne (13),
un module d'élasticité complexe (E*s) à 50 °C de chaque caoutchouc d'épaulement (14) est supérieur à un module d'élasticité complexe (E*c) à 50 °C du caoutchouc de couronne (13), et
un module à 300 % (M300s) à 50 °C de chaque caoutchouc d'épaulement (14) est supérieur à un module à 300 % (M300c) à 50 °C du caoutchouc de couronne (13),
dans lequel le module d'élasticité complexe E* est mesuré conformément à la norme industrielle japonaise JIS-K6394 en mode de déformation en traction à une contrainte initiale de 10 %, à une amplitude de ± 2,5 % et à une fréquence de 10 Hz, et
le module à 300 % M300 est mesuré conformément à la norme industrielle japonaise JIS-K6251 à 300 % d'allongement.

4. Pneumatique pour motocyclette (1) selon l'une quelconque des revendications 1 à 3, dans lequel une tangente de perte (tanδs) à 50 °C de chaque caoutchouc d'épaulement (14) est supérieure à une tangente de perte (tanδc) à 50 °C du caoutchouc de couronne (13),
dans lequel la tangente de perte (tanδs) à 50 °C de chaque caoutchouc d'épaulement (14) et la tangente de perte (tanδc) à 50 °C du caoutchouc de couronne (13) sont mesurées conformément à la norme industrielle japonaise JIS-K6394 en mode de déformation en étirement à une contrainte initiale de 5 %, à une amplitude de ± 1 % et à une fréquence de 10 Hz.

5. Pneumatique pour motocyclette (1) selon l'une quelconque des revendications 1 à 4, dans lequel
la dureté (Hc) à 100 °C du caoutchouc de couronne (13) est de 38 à 42 degrés,
le module d'élasticité complexe (E*c) à 100 °C du caoutchouc de couronne (13) est de 2,1 à 2,7 MPa, et
le module à 300 % (M300c) à 100 °C du caoutchouc de couronne (13) est de 4,0 à 4,8 MPa.

6. Pneumatique pour motocyclette (1) selon l'une quelconque des revendications 1 à 5, dans lequel
la dureté (Hc) à 100 °C de chaque caoutchouc d'épaulement (14) est de 40 à 44 degrés,
le module d'élasticité complexe (E*s) à 100 °C de chaque caoutchouc d'épaulement (14) est de 2,4 à 3,0 MPa, et
le module à 300 % (M300c) à 100 °C de chaque caoutchouc d'épaulement (14) est de 4,7 à 5,5 MPa.

7. Pneumatique pour motocyclette (1) selon l'une quelconque des revendications 1 à 6, dans lequel
la dureté (Hc) à 50 °C du caoutchouc de couronne (13) est de 44 à 48 degrés, et
le module d'élasticité complexe (E*c) à 50 °C du caoutchouc de couronne (13) est de 3,2 à 3,8 MPa,
dans lequel la dureté (Hc) à 50 °C est mesurée avec un duromètre de type A conformément à la norme industrielle japonaise JIS-K6253 et
le module d'élasticité complexe (E*c) à 50 °C du caoutchouc de couronne (13) est mesuré conformément à la norme industrielle japonaise JIS-K6394 en mode de déformation en traction à une contrainte initiale de 10 %, à une amplitude de ± 2,5 % et à une fréquence de 10 Hz.

8. Pneumatique pour motocyclette (1) selon l'une quelconque des revendications 1 à 7, dans lequel
la dureté (Hs) à 50 °C de chaque caoutchouc d'épaulement (14) est de 47 à 51 degrés, et
le module d'élasticité complexe (E*s) à 50 °C de chaque caoutchouc d'épaulement (14) est de 4,0 à 4,6 MPa,
dans lequel la dureté (Hs) à 50 °C est mesurée avec un duromètre de type A conformément à la norme industrielle japonaise JIS-K6253 et
le module d'élasticité complexe (E*s) à 50 °C de chaque caoutchouc d'épaulement (14) est mesuré conformément à la norme industrielle japonaise JIS-K6394 en mode de déformation en traction à une contrainte initiale de 10 %, à une amplitude de ± 2,5 % et à une fréquence de 10 Hz.

9. Pneumatique pour motocyclette (1) selon l'une quelconque des revendications 1 à 8, dans lequel, dans une section transversale méridienne du pneumatique dans un état à 10 kPa dans lequel le pneumatique pour motocyclette (1) est monté sur une jante standardisée et est gonflé à une pression interne de 10 kPa,
un rayon de courbure Rc d'une surface de contact au sol (21) du caoutchouc de couronne (13) est inférieur à 95 % d'une largeur en section transversale du pneumatique (W1), et
un rayon de courbure Rb d'une surface de contact au sol (22) de chaque caoutchouc d'épaulement (14) est supérieur au rayon de courbure Rc.

10. Pneumatique pour motocyclette (1) selon l'une quelconque des revendications 1 à 9, dans lequel une largeur de développement (W7) de la surface de contact au sol (21) du caoutchouc de couronne (13) est de 80 à 120 % de la largeur de développement (W3) de la couche de bande (8).

11. Pneumatique pour motocyclette (1) selon l'une quelconque des revendications 1 à 9, dans lequel une largeur de développement (W7) de la surface de contact au sol (21) du caoutchouc de couronne (13) est supérieure à la largeur de développement (W3) de la couche de bande (8).
